# EUROPÄISCHE PATENTSCHRIFT

(11) **EP 3 241 705 B1**
(45) Veröffentlichungstag und Bekanntmachung des Hinweises auf die Patenterteilung: **25.12.2019**
(21) Anmeldenummer: 17166810.6
(22) Anmeldetag: 18.04.2017
(51) Int. Cl.: B60N 2/04, F16C 29/06, B60N 2/07, B60N 2/50, F16C 29/04

(54) **FAHRZEUGSITZ MIT ROLLENFÜHRUNG**
VEHICLE SEAT WITH ROLLER GUIDE
SIÈGE DE VÉHICULE AVEC GUIDAGE À ROULETTES

(30) Priorität: 03.05.2016 DE 102016108159
(43) Veröffentlichungstag der Anmeldung: 08.11.2017
(73) Patentinhaber: GRAMMER AG, 92224 Amberg (DE)
(72) Erfinder: Kässner, Dirk, 92245 Kümmersbruck (DE); Lehner, Norbert, 92271 Freihung (DE)
(74) Vertreter: Hannke, Christian

(56) Entgegenhaltungen:
- DE-B3-102005 005 889
- DE-B3-102014 005 551
- DE-U1-202007 013 640

## Beschreibung

Die Erfindung betrifft einen Fahrzeugsitz mit Rollenführung, wobei die Rollenführung mindestens eine zumindest teilweise seitliche offene Führungsschiene und mindestens eine in der Führungsschiene abrollende, mit Teilen des Fahrzeugsitzes über mindestens eine Achse verbundene Laufrolle aufweist, gemäß dem Oberbegriff des Patentanspruches 1.

Rollenführungen für Fahrzeugsitze finden sich insbesondere bei Scherengestellen, deren Rollen bei Auf- und Abschwingen des Fahrzeugsitzes sich innerhalb einer Führungsschiene in Vorwärts- und Rückwärtsrichtung bewegen. Um ein Blockieren zwischen den Innenwänden der Führungsschiene und der Laufrolle (im Folgenden auch Rolle genannt) zu verhindern, werden derartige Rollenführungen oft mit relativ großem Spiel in radialer Richtung, beispielsweise vor allem in der Richtung, in die die Gewichtskraft eines Sitzinsassen wirkt, sowie in axialer Richtung, also in Richtung einer Mittelachse der Rolle, ausgestattet. Dies führt jedoch zu relativ lauten Geräuschen ("Klappern") beim Benutzen des Sitzes, was vom Sitzinsassen als nachteilig und störend empfunden wird.

Insbesondere bei Vorliegen einer Belastung in axialer Richtung der Laufrolle, also einer axialen Belastung besteht die Gefahr lauter Geräusche. Dies ist dann der Fall, wenn der Fahrzeugsitz einer Belastung in Richtung der Mittelachse der Rolle unterliegt, also beispielsweise dann, wenn das Fahrzeug über unebenen Boden fährt und das Eigengewicht des Sitzes, mithin dessen resultierender Kraftvektor, nicht mehr nur eine vertikale Komponente, sondern auch eine Komponente in axialer Richtung aufweist.

Um ein derartiges Spiel innerhalb der Rollenführung vermeiden zu können, werden beispielsweise innerhalb der Führungsschiene zwei Rollen statt einer Rolle angeordnet. Allerdings sind derartige Rollenführungen unter Zuhilfenahme von mindestens zwei Rollen aufwendig in ihrer Herstellung und kostenintensiv.

Bekannt sind auch Rollen, die als Zweikomponentenrollen aus Kunststoff sowie zusätzlichen blattfederähnlichen Elementen gefertigt sind, wobei letztere sich von alleine aufstellen, sobald keine Sitzbelegung oder keine ausreichende Druckbeaufschlagung mehr vorhanden ist, und somit für einen Spielausgleich sorgen. Allerdings sind auch diese Rollen kostenintensiv. Die DE 102005005889 zeigt einen Fahrzeugsitz mit Rollenführung, wobei die Rollenführung eine zumindest teilweise seitlich offene Führungsschiene und genau eine in der Führungsschiene abrollende, mit Teilen des Fahrzeugsitzes über mindestens eine Achse verbundene Laufrolle aufweist, wobei die Führungsschiene eine parallel zu einer Mittelachse der Laufrolle angeordnete rollenunterseitige Innenwand, eine parallel dazu verlaufende rollenoberseitige Innenwand sowie eine senkrecht zur Mittelachse angeordnete rollenaußenseitige Innenwand aufweist, wobei zwischen der rollenunterseitigen und der rollenaußenseitigen Innenwand mindestens eine untere Übergangsinnenwand und zwischen der rollenoberseitigen und der rollenaußenseitigen Innenwand mindestens eine obere Übergangsinnenwand angeordnet ist, wobei die Übergangsinnenwände frei von einem rechtwinkligen Abschnitt und in Richtungen von der rollenoberseitigen und der rollenunterseitigen Innenwand zur rollenaußenseitigen Innenwand hin mit einem sich kontinuierlich verkleinernden Abstand zur Mittelachse der Laufrolle ausgestaltet sind.

Aufgabe der Erfindung ist es daher, einen Fahrzeugsitz mit einer Rollenführung zur Verfügung zu stellen, welche kostengünstig und einfach herstellbar ist und insbesondere einen Spielausgleich in Richtung einer Mittelachse der Laufrolle ermöglicht.

Gelöst wird diese Aufgabe gemäß den Merkmalen des Patentanspruches 1.

Ein wesentlicher Punkt der Erfindung liegt darin, dass bei einem Fahrzeugsitz mit Rollenführung, wobei die Rollenführung eine zumindest teilweise seitlich offene Führungsschiene und genau eine in der Führungsschiene abrollende, mit Teilen des Fahrzeugsitzes über mindestens eine Achse verbundene Laufrolle aufweist, wobei die Führungsschiene eine parallel zu einer Mittelachse der Laufrolle angeordnete rollenunterseitige Innenwand, eine parallel dazu verlaufende rollenoberseitige Innenwand sowie eine senkrecht zur Mittelachse angeordnete rollenaußenseitige Innenwand aufweist, wobei zwischen der rollenunterseitigen und der rollenaußenseitigen Innenwand mindestens eine untere Übergangsinnenwand und zwischen der rollenoberseitigen und der rollenaußenseitigen Innenwand mindestens eine obere Übergangsinnenwand angeordnet ist, wobei die Übergangsinnenwände frei von einem rechtwinkligen Abschnitt und in Richtungen von der rollenoberseitigen und der rollenunterseitigen Innenwand zur rollenaußenseitigen Innenwand hin mit einem sich kontinuierlich verkleinernden Abstand zur Mittelachse der Laufrolle ausgestaltet sind, wobei bei einer axialen Belastung der Rollenführung in Richtung der Mittelachse der Laufrolle ein unterer Abschnitt eines an einem der rollenaußenseitigen Innenwand zugewandten ersten Ende der Laufrolle ausgestalteten äußeren Endabschnitts an der unteren Übergangsinnenwand kontaktierend anliegt.

Durch die beschriebene Ausgestaltung der Übergangsinnenwände ist also gewährleistet, dass diese in ihrer Funktion als Gegenlager zur Rolle stets eine Lagerkraft bereitstellen, die durch eine axiale und eine radiale Komponente gekennzeichnet ist. Die Rolle ist also hinsichtlich beider Richtungen, also in axialer und in radialer Richtung gelagert, wobei durch die Bereitstellung des Kontakts zwischen Rolle und Führungsschiene gleichzeitig für axialen und radialen Spielausgleich gesorgt ist.

Im Sinne der Erfindung wird unter "radialer Belastung" verstanden, dass eine in radialer Richtung der Laufrolle ausgerichtete Kraft auf die Rollenführung wirkt. Analog dazu wird im Sinne der Erfindung unter "axialer Belastung" verstanden, dass eine in axialer Richtung der Laufrolle ausgerichtete Kraft auf die Rollenführung wirkt.

Durch die Form der Führungsschiene und der Rolle sowie deren Anordnung zueinander ist ferner gewährleistet, dass in diesem Belastungsfall der äußere Endabschnitt abschnittsweise an der Führungsschiene anliegt. Da die Rolle sich bei Änderung der Belastung innerhalb der Führungsschiene dreht, ist weiter sichergestellt, dass hierbei immer andere Abschnitte des äußeren Endabschnitts den unteren Abschnitt ausbilden, was eine gleichmäßige Belastung der Rolle in Bezug auf ihre Gesamtlebensdauer ermöglicht.

Um die Fertigung der Rolle zu erleichtern und um unabhängig von der Winkelposition der Rolle eine möglichst gleichmäßige Abstützung zu ermöglichen, hat es sich als vorteilhaft erwiesen, wenn der äußere Endabschnitt bezüglich der Mittelachse der Laufrolle zumindest in einem entspannten Zustand der Laufrolle rotationssymmetrisch, bevorzugt ringförmig, ausgestaltet ist. Ein entspannter Zustand liegt insbesondere dann vor, wenn die Laufrolle nicht in die Führungsschiene eingebaut ist. Ist die Laufrolle in die Führungsschiene eingebaut, verformt sich der äußere Endabschnitt je nach vorliegendem Belastungsfall; unabhängig davon ist er jedoch bevorzugt als in Umfangsrichtung durchgehend ausgebildetes Ringelement ausgestaltet, wobei der Abstand des Ringelements zur Mittelachse der Laufrolle je nach vorliegendem Belastungsfall in Umfangsrichtung unterschiedlich ausgestaltet sein kann.

Ferner hat es sich als vorteilhaft erwiesen, wenn ein Verlauf der unteren Übergangsinnenwand und/ oder der oberen Übergangsinnenwand geradlinig und/ oder bogenförmig ausgebildet ist. Dies entspricht der Ausgestaltung gängiger Führungsschienen. Es müssen also keine aufwändigen Sonderteile gefertigt werden; vielmehr kann auf bereits vorhandenes Material zurückgegriffen werden, wodurch auch eine Nachrüstbarkeit bereits vorhandener Rollenführungen ermöglicht ist.

Um ein möglichst einfaches Abrollen der Laufrolle innerhalb der Führungsschiene zu gewährleisten, ist es bevorzugt, dass ein Rollenmantelteil der Laufrolle entlang der rollenunterseitigen Innenwand der Führungsschiene abrollbar ist, wobei der Rollenmantelteil der Laufrolle sich zumindest in einen ersten mantelflächenartigen Funktionsbereich, welcher das erste Ende der Laufrolle ausgestaltet und den äußeren Endabschnitt aufweist, und einen in Richtung der Achse der Laufrolle dahinter angeordneten zweiten mantelflächenartigen Funktionsbereich, welcher ein der rollenaußenseitigen Innenwand abgewandtes zweites Ende der Laufrolle ausgestaltet, aufteilt.

Durch die Ausbildung eines Rollenmantelteils, der bei entsprechend dünner Ausbildung auch als Mantelfläche bezeichnet werden kann, und der aus zwei Funktionsbereichen besteht, wovon der erste in Radialrichtung verformt werden kann, wird vorteilhaft erreicht, dass die Rolle an ihrer Unterseite hinreichend zusammengedrückt und damit deformiert wird, um an ihrer Oberseite keinen Kontakt mehr zu der oberseitigen Innenwand der Führungsschiene aufzuweisen und somit ein blockierungsfreies Rollen der Rolle innerhalb der Führungsschiene zu ermöglichen.

Weiterhin hat es sich bewährt, wenn der erste Funktionsbereich trichterförmig und der zweite Funktionsbereich zylinderförmig ausgebildet ist. Es ist vorteilhaft die Laufrolle also in mindestens zwei kontrollierbare Funktionsbereiche unterteilt; also beispielsweise in eine starre Zylinderform als zweiten Funktionsbereich in einer starren oder steifen Ausführung und einer nachgiebigen Trichterform als ersten Funktionsbereich, der die Funktion der selbstständigen Anpassung und elastischer Nachgiebigkeit aufweist. Diese Anpassung bzw. die elastische Nachgiebigkeit kann erfolgen über eine gezielte Deformation im Bereich des ersten trichterförmigen Funktionsbereichs. Grundlage dieser Deformation sind zum Beispiel die Materialeigenschaften oder auch die Formgebung des ersten Funktionsbereichs.

Beim zweiten Funktionsbereich kann von einer Zylinderform oder in Bezug auf die mantelflächige Ausgestaltung auch von einer Hohlzylinderform ausgegangen werden.

Der zweite Funktionsbereich kann auch konisch ausgebildet sein. Das heißt, dass der Außendurchmesser des zweiten Funktionsbereichs in Axialrichtung gleichmäßig zunehmend ausgebildet ist. Bevorzugt ist der größte Außendurchmesser des zweiten Funktionsbereichs dabei an dem Ende angeordnet, das in Axialrichtung der Rolle gesehen dem ersten Funktionsbereich zugewandt angeordnet ist.

Der erste trichterförmige Funktionsbereich kann dabei verschiedene Ausgestaltungen aufweisen. So kann der Trichter oder die Trichterform so gestaltet sein, dass die Außen- und Innenfläche des Trichters, die gleichzeitig dessen Mantelfläche bilden, parallel zueinander verlaufen, der Trichter also eine homogene Wanddicke aufweist. Der Trichter kann aber auch eine inhomogene Wanddicke aufweisen. Im Querschnitt betrachtet können die Kanten, die die Außenfläche und/ oder Innenfläche begrenzen, und die in Axialrichtung der Rolle betrachtet vom einen Ende des Trichters bis zum anderen Ende des Trichters verlaufen, gerade oder nach links oder rechts gekrümmt verlaufen, so dass zum Beispiel ein kelchförmiger Trichter ausgestaltet ist.

Ferner ist es bevorzugt, dass ein Außendurchmesser des zweiten Funktionsbereichs gegenüber einem Abstand zwischen der rollenoberseitigen und der rollenunterseitigen Innenwand ein Untermaß aufweist. Dies gilt insbesondere für einen entspannten Zustand der Laufrolle. So ist insbesondere gewährleistet, dass der zweite Funktionsbereich lediglich in Kontakt mit der rollenunterseitigen Innenwand der Führungsschiene tritt und das Abrollen der Rolle nicht blockiert.

In einem weiteren Belastungsfall, nämlich dann, wenn weder eine axiale Belastung der Rollenführung noch eine radiale Belastung der Rollenführung durch Sitzbelegung des Fahrzeugsitzes vorhanden ist, ist es vorteilhaft, wenn der erste Funktionsbereich derart stark gegen die rollenunterseitige und die rollenoberseitige Innenwand der Führungsschiene drückt, dass die Rolle innerhalb der Führungsschiene blockiert wird. Der erste Funktionsbereich des Rollenmantelteils der Laufrolle ist vorteilhaft durch die radiale Belastung deformierbar.

In einem weiteren Belastungsfall, nämlich bei der axialen Belastung der Rollenführung und ohne die radiale Belastung ist es vorteilhaft, wenn ein oberer Abschnitt des äußeren Endabschnitts an der oberen Übergangsinnenwand kontaktierend anliegt. Wie oben beschrieben ist, liegt in diesem Fall natürlich auch der untere Abschnitt des äußeren Endabschnitts an der unteren Übergangsinnenwand kontaktierend an.

Dieser Belastungsfall gilt somit insbesondere dann, wenn der Sitz nicht von einem Sitzinsassen belegt ist. Insbesondere sind in diesem Belastungsfall alle restlichen Abschnitte der Rolle kontaktlos zur Führungsschiene angeordnet, so dass nur der äußere Endabschnitt mittels des oberen und des unteren Abschnitts kontaktierend zur Führungsschiene angeordnet ist. So wird ein vorzeitiger Abrieb der restlichen Abschnitte bzw. der gesamten Rolle verhindert. Gleichzeitig ist dafür gesorgt, dass die Rolle spielfrei innerhalb der Führungsschiene angeordnet ist, so dass die Rolle innerhalb der Führungsschiene verspannt; eine Bewegung der Rolle innerhalb der Führungsschiene ist also in diesem Zustand nicht möglich.

Im Sinne der Erfindung sind Abschnitte der Rolle insbesondere freidrehend angeordnet, wenn sie zur Führungsschiene kontaktlos angeordnet sind. Dies gilt insbesondere für den oberen und den unteren Abschnitt des äußeren Endabschnitts.

Um das Abrollen der Rolle bei Sitzbelegung zu gewährleisten, hat es sich als vorteilhaft erwiesen, wenn bei der radialen Belastung und ohne die axiale Belastung der erste und der zweite Funktionsbereich an der unteren Innenwand kontaktierend anliegend und zur oberen Innenwand kontaktlos angeordnet sind, wobei der äußere Endabschnitt kontaktlos zu beiden Übergangsinnenwänden angeordnet ist. In diesem Fall ist also die Funktion der Übergangsinnenwände als Gegenlager zur Laufrolle idealerweise nicht nötig.

Bei einer Kombination aus axialer und radialer Belastung muss einerseits für Spielausgleich in beide Richtungen und andererseits für die Gewährleistung der Abrollbarkeit der Rolle gesorgt sein. Daher ist es vorteilhaft, wenn bei der radialen und der axialen Belastung der erste und der zweite Funktionsbereich an der unteren Innenwand kontaktierend anliegen und zur oberen Innenwand kontaktlos angeordnet sind. Ferner liegt der obere Abschnitt des äußeren Endabschnitts an der oberen Übergangsinnenwand kontaktierend an.

Sobald allerdings der Sitzinsasse den Sitz verlässt und somit keine Sitzbelegung und keine radiale Belastung mehr vorliegen, geht die Deformation der Rolle zurück, wodurch ein Kontakt der Oberseite der Rolle mit der rollenoberseitigen Innenwand der Führungsschiene ausgebildet und die Bewegung der Rolle innerhalb der Führungsschiene gebremst werden, so dass die Rolle innerhalb der Führungsschiene spielfrei anliegt.

Beim spielfreien Anliegen der Rolle in diesem Belastungsfall wird die Rolle also auch innerhalb der Führungsschiene verspannt; eine Bewegung der Rolle innerhalb der Führungsschiene ist also in diesem Zustand auch nicht möglich. Dadurch wird erreicht, dass bei Verlassen des Sitzes durch die den Sitz benutzende Person eine Bewegung des Sitzes nach oben verhindert wird und somit kein Einklemmen der Person zwischen dem Lenkrad und der Sitzteilvorderkante möglich ist.

Außerdem hat es sich für eine leichte Verformbarkeit der Laufrolle als vorteilhaft erwiesen, wenn der erste Funktionsbereich einen in Radialrichtung der Rolle innen liegenden Anteil der Laufrolle umgebend angeordnet ist, wobei in Radialrichtung der Rolle zwischen dem ersten Funktionsbereich und dem zylinderförmigen Anteil ein hohlzylinderförmig ausgebildeter Hohlraum angeordnet ist.

Um die Welle und die Laufrolle zueinander möglichst präzise zu lagern, ist es vorteilhaft, wenn die Welle möglichst über die gesamte Länge einer entsprechend in der Laufrolle angeordneten Bohrung angeordnet ist und der in Radialrichtung der Rolle innen liegende Anteil der Laufrolle entsprechend das erste und das zweite Ende der Rolle mit ausbildet.

Wenn hingegen eine möglichst präzise Anordnung zwischen Laufrolle und Führungsschiene ermöglicht werden soll, kann es vorteilhaft sein, wenn ein erster Abstand zwischen der rollenaußenseitigen Innenwand und dem äußeren Endabschnitt kleiner ist als ein zweiter Abstand zwischen der rollenaußenseitigen Innenwand und einer Stirnfläche des zylinderförmigen Anteils. So wird die Gefahr reduziert, dass auch die Stirnfläche des zylinderförmigen Anteils unerwünschten Kontakt zur rollenaußenseitigen Innenwand aufbaut, die Bewegung der Rolle zumindest bremst und eventuell Abrieb erzeugt.

Die Rolle wird also vorteilhaft so ausgeführt, dass sie in der Lage ist, Maßunterschiede im Profil durch selbstständige Anpassung an die räumlichen Begrenzungen im Profil auszugleichen. Ein Drehen der Rolle ist im spielfreien Zustand nur erschwert möglich. Dieser Zustand herrscht wie erwähnt immer dann, wenn keine radiale Belastung der Rollenführung vorliegt.

Durch radiale Belastung erfährt die Rolle eine Deformation mit der Folge, dass die Rolle unten am Profil stark aufliegt und im oberen Bereich keine Kontaktierung mit dem Profil mehr aufweist. In diesem Zustand ist ein Drehen der Rolle nun möglich.

Im Gegensatz zum zweiten Funktionsbereich hat der erste Funktionsbereich hauptsächlich die Aufgabe, das Abbremsen bzw. die Spielfreiheit der Rolle innerhalb der Führungsschiene oder das homogene Abrollen zu gewährleisten, wobei nicht dem ersten, sondern dem zweiten Funktionsbereich die Haupttragefunktion beim Abrollen zukommt. Der erste Funktionsbereich erfährt die oben beschriebene Deformation, ist also unter anderem für das Laufverhalten der Rolle und das Zusammenspiel zwischen Rolle und Führungsschiene verantwortlich.

Aufgrund des Untermaß' des zweiten Funktionsbereichs hat dieser in der ersten Funktion keinen Kontakt mit der Führungsschiene. Wird dagegen die Rolle komprimiert und die zweite Funktion abgerufen, ist der zweite Funktionsbereich ebenfalls über seine gesamte Länge in Axialrichtung der Rolle gesehen an der Führungsschiene anliegend ausgebildet. Er bietet also eine Trag- bzw. Stützfunktion und stellt die Hauptlauffläche für die Rolle beim Abrollen dar und übernimmt wie oben beschrieben beim Abrollen der Rolle die Haupttragefunktion. Der zweite Funktionsbereich bildet also die mechanische Stabilisierung bzw. Anbindung für den ersten Funktionsbereich und ist ebenfalls für die Gewährleistung eines ruhigen Laufverhaltens der Rolle zuständig, das im deformierten Zustand der Rolle zum Tragen kommt.

Ein weiterer Vorteil der oben beschriebenen Tatsache, dass ein nur geringer Anteil der Mantelfläche der Laufrolle überhaupt Kontakt mit der Führungsschiene hat, ist, dass die Rollenaußenfläche gegenüber Toleranzen unempfindlich ist, da beispielsweise durch das beschriebene Untermaß des zweiten Funktionsbereichs und des geringen Kontaktanteils des ersten Funktionsbereichs ein Abweichen des Sollmaßes der Außenkontur in den meisten Fällen nicht zu den oben beschriebenen Problemen wie Klappergeräuschen sowie Verhindern des ruhigen geräuscharmen Abrollens führt.

Weiterhin führt die beschriebene Gestaltung der Rolle zum Spielausgleich in axialer und radialer Richtung, so dass störende Geräusche weitestgehend eliminiert werden können.

Ebenfalls herrscht aufgrund des geringen Kontaktanteils auch eine geringere Sensibilität gegenüber Einfallstellen oder Lunkerbildung, die bei der Fertigung der Laufrolle entstehen können.

Insgesamt bietet die beschriebene vorteilhafte Ausführungsform der Rollenkontur also eine hohe Rollsicherheit, das heißt, ein sicheres Zusammenwirken zwischen Führungsschiene und Laufrolle.

In der Praxis hat es sich dabei als vorteilhaft erwiesen, wenn der erste mantelflächenartige Funktionsbereich der Laufrolle der rollenaußenseitigen Innenwand der Führungsschiene zugewandt angeordnet ist.

Eine bevorzugte Ausführungsform sieht vor, dass die Laufrolle aus einem Material besteht, das neben günstigen mechanischen Eigenschaften wie hohe Festigkeit und Steifigkeit bei guter Zähigkeit, hohe Verschleißfestigkeit und niedrigem Gleitreibungskoeffizienten auch eine günstige Temperaturbeständigkeit von zum Beispiel -40°C bis etwa 100°C aufweist. Vor allem muss das Material natürlich hinsichtlich seiner elastischen Eigenschaften geeignet sein, die beschriebene Federeigenschaft aufzuweisen. Es muss also elastisch verformbar oder elastisch deformierbar sein. Dies gilt natürlich vor allem für den ersten Funktionsbereich, da dieser wie oben beschrieben gezielt deformierbar und wieder rückfederbar ausgebildet sein muss. Darüber hinaus muss das Material eine ausreichende Festigkeit gegenüber Abnutzung aufgrund der Rollenbewegung aufweisen.

Demnach ist es beispielsweise vorteilhaft, wenn der erste Funktionsbereich und/ oder der zweite Funktionsbereich aus einem elastischen Material bestehen.

Eine vorteilhafte Ausführungsform sieht zum Beispiel vor, dass der erste Funktionsbereich und/ oder der zweite Funktionsbereich aus einem Kunststoff, insbesondere Polyoxymethylen (POM), bestehen.

Denkbar ist auch, dass nur der erste Funktionsbereich aus einem elastischen Material wie Kunststoff, beispielsweise POM, besteht. Der zweite Funktionsbereich kann zum Beispiel aus einem Metall bestehen. Denkbar ist, dass der erste Funktionsbereich bei der Herstellung um den Rest der Laufrolle mittels Spritzgussverfahren angeordnet wird.

Wenn die Rolle spielfrei innerhalb der Führungsschiene angeordnet ist, kann insbesondere auch von einer Blockierung der Rolle innerhalb der Führungsschiene gesprochen werden.

Durch die Ausbildung einer Laufrolle beispielsweise mit einem ersten und einem zweiten Funktionsbereich (auch "Duplexrolle" genannt) ist es demnach möglich, lediglich eine Rolle pro Rollenlagerung zu verwenden. Hierdurch ergibt sich eine herstellungsbedingte Materialeinsparung und somit auch eine Kosteneinsparung.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1: in einer schematisch perspektivischen Darstellung einen Fahrzeugsitz;
- Fig. 2: in einer perspektivischen Ausschnittdarstellung einen Anteil des Fahrzeugsitzes gemäß der vorliegenden Erfindung mit Teilen der Rollenführung;
- Fig. 3: in einer perspektivischen Darstellung eine Ausführungsform der erfindungsgemäßen Laufrolle in einem entspannten Zustand;
- Fig. 4: in einer Querschnittsdarstellung eine Führungsschiene und eine Ausführungsform der erfindungsgemäßen Laufrolle;
- Fig. 5a: in einer Querschnittsdarstellung eine erste Ausführungsform der erfindungsgemäßen Rollenführung;
- Fig. 5b: in einer Querschnittsdarstellung eine zweite Ausführungsform der erfindungsgemäßen Rollenführung;
- Fig. 6a: in einer Querschnittsdarstellung die erfindungsgemäße Rollenführung ohne radiale und axiale Belastung;
- Fig. 6b: in einer Querschnittsdarstellung die erfindungsgemäße Rollenführung ohne radiale Belastung und mit axialer Belastung;
- Fig. 6c: in einer Querschnittsdarstellung die erfindungsgemäße Rollenführung mit radialer Belastung und ohne axiale Belastung;
- Fig. 6d: in einer Querschnittsdarstellung die erfindungsgemäße Rollenführung mit radialer und axialer Belastung.

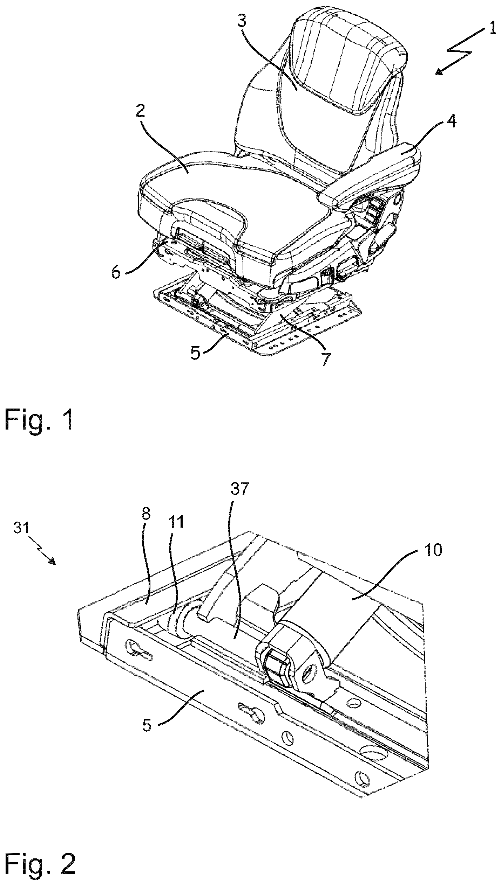

In Fig. 1 ist in einer perspektivischen Darstellung ein Fahrzeugsitz 1 mit einem Sitzteil 2, einer Rückenlehne 3 und einer Armlehne 4 dargestellt. Ein Unterteil 5 des Fahrzeugsitzes 1 ist gegenüber einem Oberteil 6 mittels Scherenarmen 7 verbunden, wobei sich das Unterteil 5 und das Oberteil 6 aufeinander zubewegen können, in der Form, dass das Oberteil 6 gegenüber dem Unterteil 5 schwingend gelagert ist. Derartige Scherengestelle und deren Funktionsweise sind aus dem Stand der Technik bestens bekannt.

Um die Scherenarme auf und ab schwingen lassen zu können, müssen diese zumindest teilweise, auch an ihren unteren Enden, in Fahrzeuglängsrichtung, also in Vorwärts- und Rückwärtsrichtung bewegbar angeordnet sein. Hierfür sind Rollenführungen 31 vorhanden, wobei Figur 2 eine Rollenführung 31 davon zeigt. Zu sehen ist gemäß Fig. 2 eine teilweise seitlich offene Führungsschiene 8, die in ihrem Querschnitt vorzugsweise im Wesentlichen C-förmig oder U-förmig ausgebildet ist und innerhalb welcher Rollen 11, in diesem Fall eine Rolle 11, rollend gelagert ist. Die Rolle 11 ist an einer Achse 37 angeordnet, an welche wiederum Teile des Fahrzeugsitzes 1 befestigt sind, wie beispielsweise ein Dämpfer 10, der eine dämpfende Wirkung auf die Auf- und Abwärtsbewegung des Fahrzeugsitzes 1, also des Oberteiles 6 gegenüber dem Unterteil 5, ausüben soll.

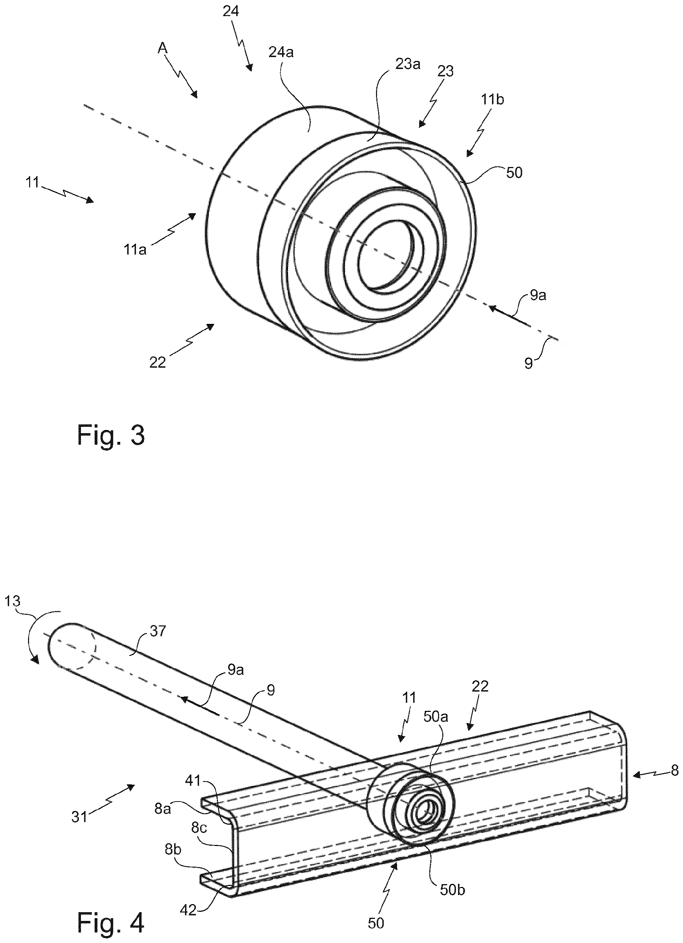

In Fig. 3 ist eine perspektivische Ansicht einer Ausführungsform der erfindungsgemäßen Laufrolle 11 in einem entspannten, also in einem nicht in eine Führungsschiene 8 eingebauten Zustand A zu sehen. Diese Rolle 11 weist einen Rollenmantelteil 22 auf, der in einen ersten mantelflächigen Funktionsbereich 23 mit einer Außenfläche 23a und einen zweiten mantelflächigen Funktionsbereich 24 mit einer Außenfläche 24a unterteilt ist. Der zweite Funktionsbereich 24 ist in Richtung 9a der Achse 9 der Laufrolle 11 hinter dem ersten Funktionsbereich 23 angeordnet.

Wie hier zu sehen ist, ist der erste Funktionsbereich 23 im Wesentlichen trichterförmig ausgebildet, bildet ferner ein erstes Ende 11b der Laufrolle 11 aus und weist einen äußeren Endabschnitt 50 auf. Dieser äußere Endabschnitt 50 ist zumindest in diesem entspannten Zustand A der Laufrolle 11 bezüglich der Mittelachse 9 der Laufrolle 11 rotationssymmetrisch und in diesem Fall ringförmig ausgestaltet.

Ferner ist der zweite mantelflächenartige Funktionsbereich 24 zylinderförmig ausgebildet und bildet ein zweites Ende 11a der Laufrolle 11 aus.

In Fig. 4 wird in einer perspektivischen Darstellung ein U-förmiges Führungsprofil bzw. eine Führungsschiene 8 mit einer rollenoberseitigen Innenwand 8a, einer rollenunterseitigen Innenwand 8b und einer rollenaußenseitigen Innenwand 8c dargestellt. Ferner sind Übergangsinnenwände 41, 42 zwischen den Innenwänden 8a, 8c und 8b, 8c angeordnet.

Dieser Darstellung ist zu entnehmen, dass die Rolle 11, wenn sie sich - in Bildebene betrachtet - nach links bewegt, also eine Rollenbewegung gemäß dem Rundpfeil 13 ausübt, mittels ihrem Rollenmantelteil 22 entlang der unterseitigen Innenwand 8b abrollt. Die Achse 9 bewegt sich selbstverständlich zusammen mit der Rolle 11 in diese Richtung.

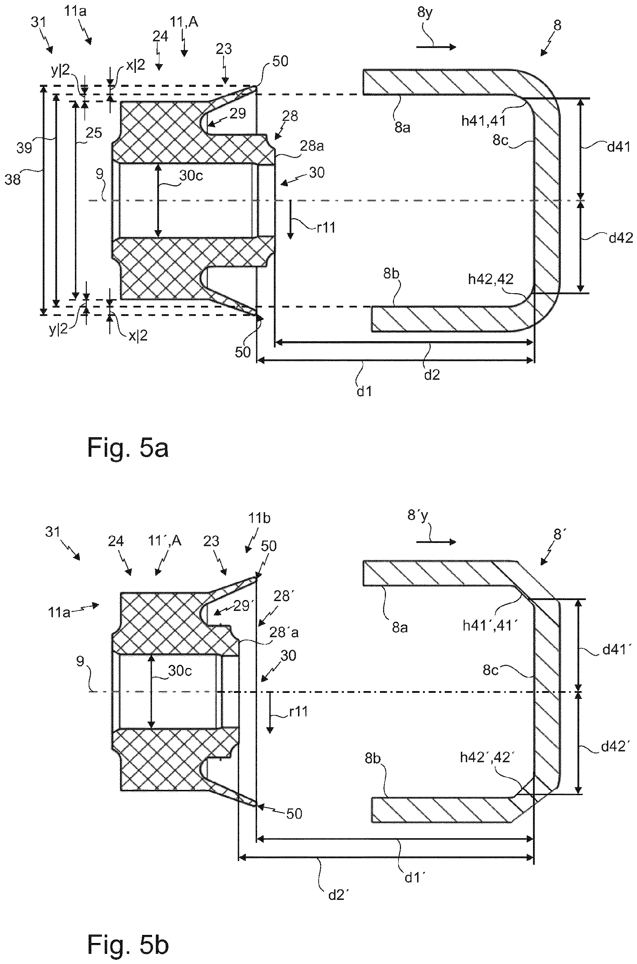

Die Figuren 5a und 5b zeigen eine erste und eine zweite Ausführungsform der vorliegenden Rollenführung 31, wobei gleich oder im Wesentlichen gleich ausgestaltete Komponenten mit identischen Bezugszeichen versehen sind.

In beiden Ausführungsformen sind eine zumindest teilweise seitlich offene Führungsschiene 8; 8', welche jeweils im Wesentlichen C-förmig ausgestaltet ist, und eine Laufrolle 11; 11' gezeigt, wobei aus Gründen der Übersichtlichkeit die Führungsschiene 8; 8' und die Laufrolle 11; 11' im auseinander gebauten Zustand und die Laufrolle 11; 11' insbesondere im entspannten Zustand A gezeigt sind. Die Laufrolle 11; 11' und insbesondere die Laufrolle 11 gemäß der Fig. 5a sind vorliegend im Wesentlichen gemäß der Laufrolle 11 aus Figur 3 ausgebildet.

Das Öffnungsmaß der Führungsschienen 8; 8' ist der jeweilige Abstand 25 zwischen der rollenoberseitigen Innenwand 8a und der parallel dazu verlaufenden rollenunterseitigen Innenwand 8b. Im Vergleich der Querschnittsdarstellung der Laufrollen 11, 11' mit der Querschnittsdarstellung der Führungsschiene 8, 8' wird deutlich, dass der Außendurchmesser 38 des ersten mantelflächenartigen Funktionsbereichs 23 gegenüber dem Abstand 25 zumindest abschnittsweise ein Übermaß x und der Außendurchmesser 39 des zweiten mantelflächenartigen Funktionsbereichs 24 gegenüber dem Abstand 25 ein Untermaß y aufweist. In Fig. 5a ist dies durch die Distanzen x/2 und y/2 veranschaulicht, welche jeweils der Hälfte des tatsächlichen Übermaßes x bzw. des Untermaßes y entsprechen.

Vorteilhaft umfasst der Abschnitt, welcher das Übermaß x gegenüber dem Abstand 25 aufweist, den äußeren Endabschnitt 50 zumindest teilweise, bevorzugt vollständig.

Da sich in beiden Ausführungsformen der Abstand 25 sowie die Außendurchmesser 38, 39 gleichen, gilt die obige Erläuterung bezüglich Übermaß x und Untermaß y für beide Ausführungsformen, auch wenn sie nur gemäß Fig. 5a veranschaulicht ist.

Die Führungsschiene 8; 8' weist in beiden Ausführungsformen eine parallel zu einer Mittelachse 9 der Laufrolle 11; 11' angeordnete rollenunterseitige Innenwand 8b, eine parallel dazu verlaufende rollenoberseitige Innenwand 8a sowie eine senkrecht zur Mittelachse 9 angeordnete rollenaußenseitige Innenwand 8c auf, wobei zwischen der rollenunterseitigen 8b und der rollenaußenseitigen Innenwand 8c eine untere Übergangsinnenwand 42; 42' und zwischen der rollenoberseitigen 8a und der rollenaußenseitigen Innenwand 8c eine obere Übergangsinnenwand 41; 41' angeordnet sind.

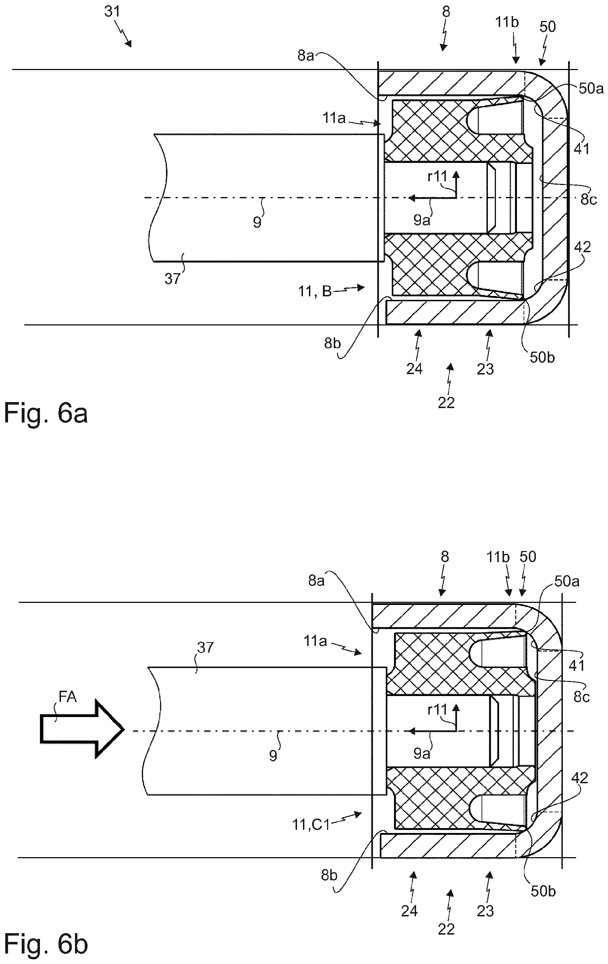

In beiden Ausführungsformen sind die Übergangsinnenwände 41, 42; 41', 42' frei von einem rechtwinkligen Abschnitt und in Richtungen 8y, 8'y von der rollenoberseitigen 8a und der rollenunterseitigen Innenwand 8b zur rollenaußenseitigen Innenwand 8c hin jeweils mit einem sich kontinuierlich verkleinernden Abstand d41, d42; d41', d42' zur Mittelachse 9 der Laufrolle 11; 11' ausgestaltet. Dabei sind an einer ausgewählten Stelle in Richtung 8y, 8'y exemplarisch jeweils die Abstände d41, d42; d41', d42' eingezeichnet. Da die Mittelachse 9 der Laufrolle 11; 11' auch im eingebauten Zustand (siehe insbesondere Fig. 6a-6d) parallel zur rollenoberseitigen 8a und zur rollenunterseitigen Innenwand 8b angeordnet ist, gelten die vorstehenden Erläuterungen auch für den gezeigten auseinander gebauten Zustand.

Weiterhin ist zu sehen, dass in beiden Ausführungsformen der erste Funktionsbereich 23 der Laufrolle 11; 11' einen in Radialrichtung r11 der Rolle 11; 11' innen liegenden Anteil 28; 28' der Laufrolle 11; 11' umgebend angeordnet ist, wobei in Radialrichtung r11 der Laufrolle 11; 11' zwischen dem ersten Funktionsbereich 23 und dem zylinderförmigen Anteil 28; 28' ein hohlzylinderförmig ausgebildeter Hohlraum 29; 29' angeordnet ist. Die Rolle 11, 11' weist zur Aufnahme eines Bauteils, das die Laufachse 37 der Rolle 11, 11' ausbilden soll, im Kernbereich einen zylinderförmigen Hohlraum 30 mit Durchmesser 30c auf.

Der erste Unterschied beider Ausführungsformen ist, dass in der gemäß Fig. 5a gezeigten ersten Ausführungsform der Verlauf h41, h42 der unteren 41 und der oberen Übergangsinnenwand 42 jeweils bogenförmig ausgebildet ist. Im Gegensatz dazu ist in der gemäß Fig. 5b gezeigten zweiten Ausführungsform der Verlauf h41', h42' der unteren 41' und der oberen Übergangsinnenwand 42'im Wesentlichen geradlinig. Denkbar wäre, dass der Verlauf h41', h42' nur am jeweiligen Übergang zur rollenoberseitigen 8a und zur rollenunterseitigen Innenwand 8b mit einem Radius versehen, mithin in diesem Abschnitt bogenförmig ausgebildet wäre.

Der zweite Unterschied beider Ausführungsformen ist, dass in der gemäß Fig. 5a gezeigten ersten Ausführungsform ein erster Abstand d1 zwischen der rollenaußenseitigen Innenwand 8c und dem äußeren Endabschnitt 50 größer ist als ein zweiter Abstand d2 zwischen der rollenaußenseitigen Innenwand 8c und einer Stirnfläche 28a des zylinderförmigen Anteils 28 der Laufrolle 11. Im Gegensatz dazu ist in der gemäß Fig. 5b gezeigten zweiten Ausführungsform ein erster Abstand d1' zwischen der rollenaußenseitigen Innenwand 8c und dem äußeren Endabschnitt 50 kleiner als ein zweiter Abstand d2' zwischen der rollenaußenseitigen Innenwand 8c und einer Stirnfläche 28'a des zylinderförmigen Anteils 28' der Laufrolle 11'.

Da sich beide gezeigten Ausführungsformen der Laufrolle 11; 11' und beide gezeigten Ausführungsformen der Führungsschiene 8; 8' beliebig miteinander kombinieren lassen, sind also insgesamt neben den gemäß Fig. 5a und 5b zwei gezeigten Kombinationsmöglichkeiten mindestens noch zwei weitere Kombinationsmöglichkeiten vorhanden.

Die Figuren 6a-6d zeigen die Laufrolle 11 und die Führungsschiene 8 aus Fig. 5a jeweils im zusammengebauten Zustand, bilden aber unterschiedliche Belastungsfälle der Rollenführung 31 bzw. Zustände B, C1, C2 und C3 der Laufrolle 11 ab. Zur besseren Übersichtlichkeit sind in den Figuren 6a-6d die Abschnitte der Führungsschiene, welche die Innenwände 8a, 8b, 8c aufweisen, von den Abschnitten der Führungsschiene, welche die Übergangsinnenwände 41, 42 aufweisen, jeweils mit einer gestrichelten Linie getrennt.

In der Fig. 6a ist die Laufrolle 11 in die Führungsschiene 8 eingebaut und demzufolge hinsichtlich des ersten Funktionsbereichs 23 deformiert, so dass die Laufrolle 11 im Gegensatz zum gemäß der vorliegenden Figur 3 gezeigten unbelasteten und entspannten Zustand A hier in einem eingebauten und verspannten Zustand B vorliegt. Auf die Rollenführung 31 wirkt jedoch außer den gezeigten Einbaubedingungen und dem Eigengewicht der Rollenführung keine weitere Belastung im Sinne einer axialen FA oder radialen Belastung FR.

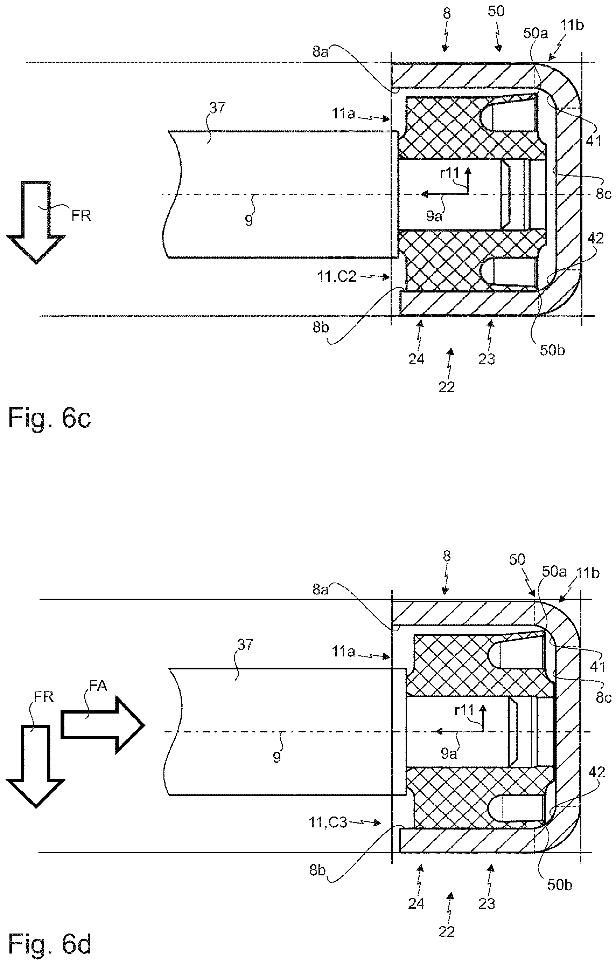

Der erste Funktionsbereich 23 drückt wie gezeigt ohne Vorliegen einer radialen FR und einer axialen Belastung FA derart stark gegen die rollenunterseitige Innenwand 8b und die rollenoberseitige Innenwand 8a der Führungsschiene 8, dass die Rolle 11 innerhalb der Führungsschiene 8 blockiert wird. Dies ist dann der Fall, wenn der Sitzinsasse den Sitz 1 verlässt und somit keine Sitzbelegung mehr vorliegt; dementsprechend liegt dann auch keine ausreichende Druckbeaufschlagung mehr für die Rolle 11 vor, um diese an ihrer Unterseite in Kontakt zu der rollenunterseitigen Innenwand 8b der Führungsschiene 8 ausreichend zu verformen (siehe Fig. 6c).

Es ist also ein Kontakt der Oberseite der Rolle 11 mit der rollenoberseitigen Innenwand 8a der Führungsschiene 8 ausgebildet, wodurch die Bewegung der Rolle 11 innerhalb der Führungsschiene 8 gebremst wird und die Rolle 11 innerhalb der Führungsschiene 8 spielfrei anliegt. Insbesondere ist die Rolle 11 in diesem Belastungsfall kontaktlos in Bezug auf die Übergangsinnenwände 41, 42 angeordnet.

Durch ein derartiges Abbremsen der Rolle 11 innerhalb der Führungsschiene 8 wird erreicht, dass bei Verlassen des Sitzes durch die den Sitz benutzende Person eine Bewegung des Sitzes nach oben verhindert wird und somit kein Einklemmen der Person zwischen dem Lenkrad und der Sitzteilvorderkante möglich ist.

In der Fig. 6b ist die Laufrolle 11 in die Führungsschiene 8 eingebaut und demzufolge hinsichtlich des ersten Funktionsbereichs 23 deformiert. Zusätzlich wirkt auf die Rollenführung 31, mithin auf die Laufrolle 11 vorliegend noch eine axiale Belastung FA, so dass die Laufrolle 11 hier in einem eingebauten und verspannten und axial belasteten Zustand C1 vorliegt.

Wie zu sehen ist, liegt in diesem Belastungsfall, also bei einer axialen Belastung FA der Rollenführung 31 in Richtung der Mittelachse 9 der Laufrolle 11 und ohne eine radiale Belastung FR der Rollenführung 31 durch Sitzbelegung des Fahrzeugsitzes 1 der am der rollenaußenseitigen Innenwand 8c zugewandten ersten Ende 11b der Laufrolle 11 ausgestaltete äußerer Endabschnitt 50 an beiden Übergangsinnenwänden 41, 42 mittels der Abschnitte 50a und 50b kontaktierend an. Es ist also somit für Spielausgleich in axialer Richtung 9a gesorgt.

In der Fig. 6c ist die Laufrolle 11 in die Führungsschiene 8 eingebaut und demzufolge hinsichtlich des ersten Funktionsbereichs 23 deformiert. Zusätzlich wirkt auf die Rollenführung 31, mithin auf die Laufrolle 11 vorliegend noch eine radiale Belastung FR, so dass die Laufrolle 11 hier in einem eingebauten und verspannten und radial belasteten Zustand C2 vorliegt. Somit entspricht dieser Belastungsfall dem gemäß Figur 4 gezeigten Zustand, bei dem eine Druckbeaufschlagung gemäß dem Pfeil FR durch beispielsweise eine Sitzbelegung mittels einer Person stattfindet. Eine axiale Belastung FA liegt jedoch nicht vor.

Beim gezeigten Belastungsfall wird die Rolle 11 nach unten gedrückt und erfährt eine Verformung ihrer Unterseite, welches die Kontaktseite zu der unterseitigen Innenwand 8b der Führungsschiene 8 darstellt. Somit wird die Rolle 11 an ihrer Oberseite, also gegenüber der oberseitigen Innenwand 8a der Führungsschiene 8 freigegeben.

Gleichzeitig wird die Rolle 11 an ihrem Kontaktbereich an der rollenunterseitigen Innenwand 8b komprimiert, so dass sie in diesem Bereich nach oben gedrückt wird. Hier liegen sowohl der erste Funktionsbereich 23 als auch der zweite Funktionsbereich 24 über ihre gesamte Länge in Axialrichtung 9a der Rolle 11 betrachtet auf der unterseitigen Innenwand 8b der Führungsschiene 8 auf, wodurch ein Abrollen der Rolle 11 ermöglicht wird.

Es ist gemäß der Fig. 6c gezeigt, dass bei der radialen Belastung FR und ohne die axiale Belastung FA der erste 23 und der zweite Funktionsbereich 24 an der unteren Innenwand 8b kontaktierend anliegen und zur oberen Innenwand 8a kontaktlos angeordnet sind, wobei der äußere Endabschnitt 50 kontaktlos zu beiden Übergangsinnenwänden 41, 42 angeordnet ist. Ferner ist zu sehen, dass der erste Funktionsbereich 23 durch die radiale Belastung FR deformierbar ist.

In der Fig. 6d ist die Laufrolle 11 in die Führungsschiene 8 eingebaut und demzufolge hinsichtlich des ersten Funktionsbereichs 23 deformiert. Zusätzlich wirkt auf die Rollenführung 31, mithin auf die Laufrolle 11 vorliegend noch die radiale Belastung FR und die axiale Belastung FA, so dass die Laufrolle 11 hier in einem eingebauten und verspannten und radial belasteten und axial belasteten Zustand C3 vorliegt.

Wie beim Belastungsfall gemäß der vorliegenden Fig. 6c wird die Rolle 11 durch die radiale Belastung FR nach unten gedrückt und erfährt die oben beschriebene Verformung ihrer Unterseite, wodurch letztendlich ein Abrollen der Rolle 11 ermöglicht wird.

Es ist gemäß der Fig. 6d ferner zu entnehmen, dass bei der radialen FR und der axialen Belastung FA der erste 23 und der zweite Funktionsbereich 24 an der unteren Innenwand 8b kontaktierend anliegen und zur oberen Innenwand 8a kontaktlos angeordnet sind, wobei der äußere Endabschnitt 50 mittels des unteren Abschnitts 50b an der unteren Übergangsinnenwand 42 kontaktierend anliegt. Zur oberen Übergangsinnenwand 41 hingegen ist der äußere Endabschnitt 50 kontaktlos angeordnet.

Insbesondere führt also das Anliegen der axialen Belastung FA zu einem Kontakt zwischen zumindest der unteren Übergangsinnenwand 42 und zumindest dem unteren Abschnitt 50b des äußeren Endabschnitts 50, da die Rollenführung 31 insgesamt vorteilhaft so ausgelegt ist, dass ohne die axiale Belastung FA die Rolle 11 an der rollenunterseitigen 8b und rollenoberseitigen Innenwand 8a anliegt und unmittelbar angrenzend an den Übergangsinnenwänden 41, 42 angeordnet ist (wie gemäß Fig. 6a und 6c gezeigt).

### Bezugszeichenliste

- 1: Fahrzeugsitz
- 2: Sitzteil
- 3: Rückenlehne
- 4: Armlehne
- 5: Unterteil
- 6: Oberteil
- 7: Scherenarme
- 8; 8': Führungsschiene
- 8a: rollenoberseitige Innenwand
- 8b: rollenunterseitige Innenwand
- 8c: rollenaußenseitige Innenwand
- 8y; 8'y: Richtung
- 9: Mittelachse
- 9a: Achsenrichtung
- 10: Dämpfer
- 11; 11': Rolle/Laufrolle
- 11a, 11b: Ende
- 12: Pfeil/Druckbeaufschlagung
- 13: Rundpfeil
- 19: Lauffläche
- 22: Rollenmantelteil
- 23, 24: Funktionsbereich
- 23a: Außenfläche
- 24a: Außenfläche
- 25: Abstand
- 28; 28': Anteil
- 28a, 28'a: Stirnfläche
- 29, 29': Hohlraum
- 30: Hohlraum
- 30c: Durchmesser
- 31: Rollenführung
- 37: Achse
- 38, 39: Außendurchmesser
- 41, 42, 41', 42': Übergangsinnenwand
- 50: äußerer Endabschnitt
- 50a, 50b: Abschnitt
- d1, d2, d1', d2', d41, d42, d41', d42': Abstand
- FA: axiale Belastung
- FR: radiale Belastung
- h41, h42, h41', h42': Verlauf
- r11: Radialrichtung
- x: Übermaß
- x/2, y/2: Distanz
- y: Untermaß

## Patentansprüche

1. Fahrzeugsitz (1) mit Rollenführung (31), wobei die Rollenführung (31) eine zumindest teilweise seitlich offene Führungsschiene (8; 8') und genau eine in der Führungsschiene (8; 8') abrollende, mit Teilen des Fahrzeugsitzes (1) über mindestens eine Achse (37) verbundene Laufrolle (11; 11') aufweist, wobei die Führungsschiene (8; 8') eine parallel zu einer Mittelachse (9) der Laufrolle (11; 11') angeordnete rollenunterseitige Innenwand (8b), eine parallel dazu verlaufende rollenoberseitige Innenwand (8a) sowie eine senkrecht zur Mittelachse (9) angeordnete rollenaußenseitige Innenwand (8c) aufweist, wobei zwischen der rollenunterseitigen (8b) und der rollenaußenseitigen Innenwand (8c) mindestens eine untere Übergangsinnenwand (42; 42') und zwischen der rollenoberseitigen (8a) und der rollenaußenseitigen Innenwand (8c) mindestens eine obere Übergangsinnenwand (41; 41') angeordnet ist, wobei die Übergangsinnenwände (41, 42; 41', 42') frei von einem rechtwinkligen Abschnitt und in Richtungen von der rollenoberseitigen (8a) und der rollenunterseitigen Innenwand (8b) zur rollenaußenseitigen Innenwand (8c) hin mit einem sich kontinuierlich verkleinernden Abstand (d41, d42; d41', d42') zur Mittelachse (9) der Laufrolle (11; 11') ausgestaltet sind,
**dadurch gekennzeichnet, dass**
bei einer axialen Belastung (FA) der Rollenführung (31) in Richtung der Mittelachse (9) der Laufrolle (11; 11') ein unterer Abschnitt (50b) eines an einem der rollenaußenseitigen Innenwand (8c) zugewandten ersten Ende (11b) der Laufrolle (11; 11') ausgestalteten äußeren Endabschnitts (50) an der unteren Übergangsinnenwand (42; 42') kontaktierend anliegt.

2. Fahrzeugsitz (1) nach Anspruch 1,
**dadurch gekennzeichnet, dass**
der äußere Endabschnitt (50) bezüglich der Mittelachse (9) der Laufrolle (11; 11') zumindest in einem entspannten Zustand (A) der Laufrolle (11; 11') rotationssymmetrisch, bevorzugt ringförmig, ausgestaltet ist.

3. Fahrzeugsitz (1) nach einem der vorhergehenden Ansprüche,
**dadurch gekennzeichnet, dass**
ein Verlauf (h41, h42; h41', h42') der unteren Übergangsinnenwand (41; 41') und/ oder der oberen Übergangsinnenwand (42; 42') geradlinig und/ oder bogenförmig ausgebildet ist.

4. Fahrzeugsitz (1) nach einem der vorhergehenden Ansprüche,
**dadurch gekennzeichnet, dass**
ein Rollenmantelteil (22) der Laufrolle (11; 11') entlang der rollenunterseitigen Innenwand (8b) der Führungsschiene (8; 8') abrollbar ist, wobei der Rollenmantelteil (22) der Laufrolle (11; 11') sich zumindest in einen ersten mantelflächenartigen Funktionsbereich (23), welcher das erste Ende (11b) der Laufrolle (11; 11') ausgestaltet und den äußeren Endabschnitt (50) aufweist, und einen in Richtung der Achse (9) der Laufrolle (11; 11') dahinter angeordneten zweiten mantelflächenartigen Funktionsbereich (24), welcher ein der rollenaußenseitigen Innenwand (8c) abgewandtes zweites Ende (11a) der Laufrolle (11; 11') ausgestaltet, aufteilt.

5. Fahrzeugsitz (1) nach Anspruch 4,
**dadurch gekennzeichnet, dass**
der erste Funktionsbereich (23) trichterförmig und der zweite Funktionsbereich (24) zylinderförmig ausgebildet ist.

6. Fahrzeugsitz (1) nach Anspruch 4 oder 5,
**dadurch gekennzeichnet, dass**
ein Außendurchmesser (25) des zweiten Funktionsbereichs (24) gegenüber einem Abstand (39) zwischen der rollenoberseitigen (8a) und der rollenunterseitigen Innenwand (8b) ein Untermaß (y) aufweist.

7. Fahrzeugsitz (1) nach einem der Ansprüche 4-6,
**dadurch gekennzeichnet, dass**
der erste Funktionsbereich (23) des Rollenmantelteils (22) der Laufrolle (11; 11') durch eine radiale Belastung (FR) der Rollenführung (31) durch Sitzbelegung des Fahrzeugsitzes (1) deformierbar ist und ohne die radiale (FR) und die axiale Belastung (FA) der Rollenführung (31) derart stark gegen die rollenunterseitige (8b) und die rollenoberseitige Innenwand (8a) der Führungsschiene (8; 8') drückt, dass die Laufrolle (11; 11') innerhalb der Führungsschiene (8; 8') blockiert wird.

8. Fahrzeugsitz (1) einem der vorhergehenden Ansprüche,
**dadurch gekennzeichnet, dass**
bei der axialen Belastung (FA) der Rollenführung (31) und ohne die radiale Belastung (FR) ein oberer Abschnitt (50a) des äußeren Endabschnitts (50) an der oberen Übergangsinnenwand (41; 41') kontaktierend anliegt.

9. Fahrzeugsitz (1) nach einem der Ansprüche 4-8,
**dadurch gekennzeichnet, dass**
bei der radialen Belastung (FR) und ohne die axiale Belastung (FA) der erste (23) und der zweite Funktionsbereich (24) an der rollenunterseitigen Innenwand (8b) kontaktierend anliegend und zur rollenoberseitigen Innenwand (8a) kontaktlos angeordnet sind, wobei der äußere Endabschnitt (50) kontaktlos zu beiden Übergangsinnenwänden (41, 42; 41', 42') angeordnet ist.

10. Fahrzeugsitz (1) nach einem der Ansprüche 4-9,
**dadurch gekennzeichnet, dass**
bei der radialen (FR) und der axialen Belastung (FA) der erste (23) und der zweite Funktionsbereich (24) an der rollenunterseitigen Innenwand (8b) kontaktierend anliegen und zur rollenoberseitigen Innenwand (8a) kontaktlos angeordnet sind.

11. Fahrzeugsitz nach einem der Ansprüche 4-10,
**dadurch gekennzeichnet, dass**
der erste Funktionsbereich (23) einen in Radialrichtung (r11) der Laufrolle (11; 11') innen liegenden zylinderförmigen Anteil (28; 28') der Laufrolle (11; 11') umgebend angeordnet ist, wobei in Radialrichtung (r11) der Laufrolle (11; 11') zwischen dem ersten Funktionsbereich (23) und dem zylinderförmigen Anteil (28; 28') ein hohlzylinderförmig ausgebildeter Hohlraum (29; 29') angeordnet ist.

12. Fahrzeugsitz nach Anspruch 11,
**dadurch gekennzeichnet, dass**
ein erster Abstand (d1') zwischen der rollenaußenseitigen Innenwand (8c) und dem äußeren Endabschnitt (50) kleiner ist als ein zweiter Abstand (d2') zwischen der rollenaußenseitigen Innenwand (8c) und einer Stirnfläche (28a') des zylinderförmigen Anteils (28').

## Claims

1. Vehicle seat (1) with a roller guide (31), wherein the roller guide (31) has one at least partially laterally open guide rail (8; 8') and exactly one running roller (11; 11') rolling in the guide rail (8; 8') and connected to parts of the vehicle seat (1) by means of at least one axle (37), wherein the guide rail (8; 8') comprises a roller bottom-side inner wall (8b) arranged parallel to a central axis (9) of the running roller (11; 11'), extending parallel thereto a roller top-side inner wall (8a) and a roller outer-side inner wall (8c) arranged perpendicularly to the central axis (9), wherein at least one lower transition inner wall (42; 42') is arranged between the roller bottom-side (8b) and the roller outer-side inner wall (8c) and at least one upper transition inner wall (41; 41') is arranged between the roller top-side (8a) and the roller outer-side inner wall (8c), wherein the transition inner walls (41, 42; 41', 42') are configured free from a right-angled portion and in directions from the roller top-side (8a) and the roller bottom-side inner wall (8b) towards the roller outer-side inner wall (8c) with a continuously reducing spacing (d41, d42; d41', d42') from the central axis (9) of the running roller (11; 11'),
**characterised in that**
on an axial loading (FA) of the roller guide (31) in the direction of the central axis (9) of the running roller (11; 11'), a lower portion (50b) of an outer end portion (50) at a first end (11b) of the running roller (11; 11') configured to face the roller outer-side inner wall (8c) lies with contact against the lower transition inner wall (42; 42').

2. Vehicle seat (1) according to claim 1,
**characterised in that**
the outer end portion (50) is configured, at least in a relaxed state (A) of the running roller (11; 11'), to be rotationally symmetrical, preferably annular, in relation to the central axis (9) of the running roller (11; 11').

3. Vehicle seat (1) according to any of the preceding claims,
**characterised in that**
a shape (h41, h42; h41', h42') of the lower transition inner wall (41; 41') and/or the upper transition inner wall (42; 42') is straight and/or arc-shaped.

4. Vehicle seat (1) according to any of the preceding claims,
**characterised in that**
a roller cover (22) of the running roller (11; 11') is rollable along the roller bottom-side inner wall (8b) of the guide rail (8; 8'), wherein the roller cover (22) of the running roller (11; 11') segments at least into a first cover surface functional region (23) which forms the first end (11b) of the running roller (11; 11') and has the outer end portion (50), and a second cover surface functional region (24) arranged therebehind in the direction of the axis (9) of the running roller (11; 11'), which forms a second end (11a) of the running roller (11; 11') facing away from the roller outer-side inner wall (8c).

5. Vehicle seat (1) according to claim 4,
**characterised in that**
the first functional region (23) is configured to be funnel-shaped and the second functional region (24) is configured to be cylindrical.

6. Vehicle seat (1) according to claim 4 or 5,
**characterised in that**
an outer diameter (25) of the second functional region (24) has an undersize (y) in relation to a spacing (39) between the roller top-side (8a) and the roller bottom-side inner wall (8b).

7. Vehicle seat (1) according to any of claims 4-6,
**characterised in that**
the first functional region (23) of the roller cover (22) of the roller (11; 11') is deformable by means of a radial loading (FR) of the roller guide (31) due to seat occupancy of the vehicle seat (1) and without the radial (FR) and the axial loading (FA) of the roller guide (31), presses so strongly against the roller bottom-side (8b) and the roller top-side inner wall (8a) of the guide rail (8; 8') that the roller (11; 11') is blocked within the guide rail (8; 8').

8. Vehicle seat (1) according to any of the preceding claims,
**characterised in that**
on axial loading (FA) of the roller guide (31) and without the radial loading (FR), an upper portion (50a) of the outer end portion (50) lies with contact against the upper transition inner wall (41; 41').

9. Vehicle seat (1) according to any of claims 4-8,
**characterised in that**
on radial loading (FR) and without the axial loading (FA), the first (23) and the second functional region (24) are arranged to lie with contact against the roller bottom-side inner wall (8b) and without contact to the roller top-side inner wall (8a), wherein the outer end portion (50) is arranged without contact to both transition inner walls (41, 42; 41', 42').

10. Vehicle seat (1) according to any of claims 4-9,
**characterised in that**
on radial (FR) and axial loading (FA), the first (23) and the second functional region (24) are arranged to lie with contact against the roller bottom-side inner wall (8b) and without contact on the roller top-side inner wall (8a).

11. Vehicle seat according to any of claims 4-10,
**characterised in that**
the first functional region (23) is arranged surrounding a cylindrical portion (28; 28') of the running roller (11; 11') lying inwardly in radial direction (r11) of the roller (11; 11'), wherein in the radial direction (r11) of the roller (11; 11'), a hollow cylindrically-formed cavity (29, 29') is arranged between the first functional region (23) and the cylindrical portion (28; 28').

12. Vehicle seat according to claim 11,
**characterised in that**
a first spacing (d1') between the roller outer-side inner wall (8c) and the outer end portion (50) is less than a second spacing (d2') between the roller outer-side inner wall (8c) and an end face (28a') of the cylindrical portion (28').

## Revendications

1. Siège de véhicule (1) comportant un guidage à galet (31), dans lequel le guidage à galet (31) présente un rail de guidage (8 ; 8') au moins partiellement ouvert latéralement et juste un galet (11 ; 11') roulant dans le rail de guidage (8 ; 8'), relié à des parties du siège de véhicule (1) par au moins un axe (37), dans lequel le rail de guidage (8 ; 8') présente une paroi interne (8b) côté inférieur du galet, disposée parallèlement à un axe central (9) du galet (11 ; 11'), une paroi interne (8a) côté supérieur du galet, s'étendant parallèlement à celle-ci ainsi qu'une paroi interne (8c) côté extérieur du galet, disposée perpendiculairement à l'axe central (9), dans lequel au moins une paroi interne de transition inférieure (42 ; 42') est disposée entre la paroi interne (8b) côté inférieur du galet et la paroi interne (8c) côté extérieur du galet et au moins une paroi interne de transition supérieure (41 ; 41') est disposée entre la paroi interne (8a) côté supérieur du galet et la paroi interne (8c) côté extérieur du galet, dans lequel les parois internes de transition (41, 42 ; 41', 42') sont configurées exemptes d'une partie à angle droit et, dans des directions de la paroi interne (8a) côté supérieur du galet et de la paroi interne (8b) côté inférieur du galet vers la paroi interne (8c) côté extérieur du galet, sont configurées avec une distance (d41, d42 ; d41', d42') diminuant en continu par rapport à l'axe central (9) du galet (11 ; 11'),
**caractérisé par le fait que**
lors d'une charge axiale (FA) du guidage à galet (31) dans la direction de l'axe central (9) du galet (11 ; 11'), une partie inférieure (50b) d'une partie d'extrémité externe (50), configurée à une première extrémité (11b) du galet (11 ; 11') tournée vers la paroi interne (8c) côté extérieur du galet s'étend avec contact contre la paroi interne de transition inférieure (42 ; 42').

2. Siège de véhicule (1) selon la revendication 1,
**caractérisé par le fait que**
la partie d'extrémité externe (50) est configurée au moins dans un état relâché (A) du galet (11 ; 11'), pour être symétrique en rotation, de préférence de forme annulaire, par rapport à l'axe central (9) du galet (11 ; 11').

3. Siège de véhicule (1) selon l'une des revendications précédentes,
**caractérisé par le fait que**
une forme (h41, h42 ; h41', h42') de la paroi interne de transition inférieure (41 ; 41') et/ou de la paroi interne de transition supérieure (42 ; 42') est réalisée rectiligne et/ou en forme d'arc.

4. Siège de véhicule (1) selon l'une des revendications précédentes,
**caractérisé par le fait que**
une partie d'enveloppe de galet (22) du galet (11 ; 11') est apte à rouler le long de la paroi interne (8b) côté inférieur du galet du rail de guidage (8 ; 8'), la partie d'enveloppe de galet (22) du galet (11 ; 11') se divisant au moins en une première région fonctionnelle de type surface d'enveloppe (23), laquelle forme la première extrémité (11b) du galet (11 ; 11') et présente la partie d'extrémité externe (50), et une seconde région fonctionnelle de type surface d'enveloppe (24) disposée derrière celle-ci dans la direction de l'axe (9) du galet (11 ; 11'), laquelle forme une seconde extrémité (11a) du galet (11 ; 11') tournée à l'opposé de la paroi interne (8c) côté extérieur du galet.

5. Siège de véhicule (1) selon la revendication 4,
**caractérisé par le fait que**
la première région fonctionnelle (23) est réalisée en forme d'entonnoir et la seconde région fonctionnelle (24) est réalisée de forme cylindrique.

6. Siège de véhicule (1) selon l'une des revendications 4 et 5,
**caractérisé par le fait qu'**
un diamètre externe (25) de la seconde région fonctionnelle (24) présente une dimension inférieure (y) par rapport à une distance (39) entre la paroi interne (8a) côté supérieur du galet et la paroi interne (8b) côté inférieur du galet.

7. Siège de véhicule (1) selon l'une des revendications 4 à 6,
**caractérisé par le fait que**
la première région fonctionnelle (23) de la partie d'enveloppe de galet (22) du galet (11 ; 11') est déformable par une charge radiale (FR) du guidage à galet (31) due à une occupation de siège du siège de véhicule (1) et, sans la charge radiale (FR) et la charge axiale (FA) du guidage à galet (31), appuie à tel point contre la paroi interne (8b) côté inférieur du galet et la paroi interne (8a) côté supérieur du galet du rail de guidage (8 ; 8') que le galet (11 ; 11') est bloqué à l'intérieur du rail de guidage (8 ; 8').

8. Siège de véhicule (1) selon l'une des revendications précédentes,
**caractérisé par le fait que**
lors de la charge axiale (FA) du guidage à galet (31) et sans la charge radiale (FR), une partie supérieure (50a) de la partie d'extrémité extérieure (50) s'étend avec contact contre la paroi interne de transition supérieure (41 ; 41').

9. Siège de véhicule (1) selon l'une des revendications 4 à 8,
**caractérisé par le fait que**
lors de la charge radiale (FR) et sans la charge axiale (FA), la première (23) et la seconde région fonctionnelle (24) s'étendent avec contact contre la paroi interne (8b) côté inférieur du galet et sans contact sur la paroi interne (8a) côté supérieur du galet, la partie d'extrémité extérieure (50) étant disposée sans contact sur les deux parois internes de transition (41, 42 ; 41', 42').

10. Siège de véhicule (1) selon l'une des revendications 4 à 9,
**caractérisé par le fait que**
lors de la charge radiale (FR) et de la charge axiale (FA), la première (23) et la seconde région fonctionnelle (24) s'étendent avec contact contre la paroi interne (8b) côté inférieur du galet et sans contact sur la paroi interne (8a) côté supérieur du galet.

11. Siège de véhicule (1) selon l'une des revendications 4 à 10,
**caractérisé par le fait que**
la première région fonctionnelle (23) est disposée entourant une partie (28 ; 28') du galet (11 ; 11') de forme cylindrique s'étendant vers l'intérieur dans la direction radiale (r11) du galet (11 ; 11'), une cavité (29 ; 29') réalisée sous la forme d'un cylindre creux étant disposée entre la première région fonctionnelle (23) et la partie de forme cylindrique (28 ; 28') dans la direction radiale (r11) du galet (11 ; 11').

12. Siège de véhicule (1) selon la revendication 11,
**caractérisé par le fait qu'**
une première distance (d1') entre la paroi interne (8c) côté extérieur du galet et la partie d'extrémité extérieure (50) est plus petite qu'une seconde distance (2d') entre la paroi interne (8c) côté extérieur du galet et une surface frontale (28a') de la partie de forme cylindrique (28').
